# EUROPEAN PATENT APPLICATION

(11) **EP 3 748 583 A1**
(43) Date of publication of application: **09.12.2020**
(21) Application number: 19178163.2
(22) Date of filing: 04.06.2019
(51) Int. Cl.: G06T 15/04, G06T 19/00

(54) **SUBSURFACE UTILITY VISUALIZATION**

(71) Applicant: My Virtual Reality Software AS, 0152 Oslo (NO)
(72) Inventor: FJELLVANG, Rune, 0196 Oslo (NO); UMBERA, Stanislav, 767 01 Kromeriz (CZ); BORDING, Rasmus, 0177 Oslo (NO)
(74) Representative: Kaminski Harmann

(57) **Abstract**

The invention relates to a method for providing an augmented view of an underground infrastructure in a real world scenery. It comprises a deriving of real time real world images of the real world scenery, deriving a location information for the field of view of those images, deriving a six degree of freedom spatial reference of the real world images and their image content by image processing and an inertial measurement unit. With a deriving of a geospatial information of underground infrastructure in vicinity of the location information from an underground infrastructure database, a calculating of a virtual rendering of the underground infrastructure is done with a same virtual field of view and perspective as the field of view of the real world images. With an augmenting of the virtual rendering in the real world images, a providing of resulting augmented images by a two or three dimensional vision unit is established.

According to the invention, the virtual rendering and the augmenting is done with a determining of a ground surface in the real world images and a transforming of the ground surface by a semi-transparent virtual representation of the ground surface, wherein the rendering of the virtual underground infrastructure is visualized below the virtual ground surface in the augmented image.

## Description

The present invention relates generally to a method for deriving an augmented view of underground infrastructure according to the preamble of claim 1, as well as to a corresponding device, system and computer program product.

The present invention relates to a determination of structures which are at least partially hidden beneath a solid surface. In particular, the invention related to a visualization of structures beneath an opaque surface in an augmented reality (AR) view. Such underground structures can for example be buried pipework, buried cables, ducts, channels, tunnels, vents, connectors, bunkers or other underground construction work, etc.

When digging up the ground, there is often the question what to expect. Not only in case of inspection or repair of underground utilities, like ruptured, corroded, worn or leaking underground pipes or wirings, but also when planning and adding new or additional underground utilities. Also, when general construction work is done, an occupation and/or clearance of a worksite with respect to underground facilities has to be checked and verified in advance of excavation. For example, it has to be derived in which areas caution is needed during digging, where work has to be done by hand (or by a suction dredger, hydraulic dredger, etc.) or where heavy machinery can be used. Another question is whether underground facilities are live or not, if there are orphaned structures that can be destroyed without any harm, which of the underground structures have to be shut down before work and where and how to shut them down, etc. Such need not only arises for off-site planning but also live at-site, before and/or during the construction work.

Although plan or map data is available and/or such data can be derived by detection equipment like a cable-detectors, cable-locators, cable-tracers, cable avoidance tools (CAT), ground penetrating radar (GPR), metal detectors, sonars, etc. - such available data tends to be difficult to read at site and often requires a usage of surveying equipment to spatially reference the plan to the real world.

Recently, so-called augmented reality (AR) technology is used for doing so. Therein, an actual view of the real world - e.g. captured by a 2D or 3D camera or by a see-though device - is visually overlaid by computer generated graphics and renderings to augment the real world view with additional virtual information. Computational frameworks and software development kits (SDK) like the "ARKit", "ARCore", "Wikitude", "Vuforia", "ARToolKit" etc. are providing a wide range of basic functionalities, enabling the implementation of such AR-views which can be used in the present invention, e.g. on a mobile device like a smartphone, tablet computer, virtual reality glasses, head-mounted displays (HMD), head-up displays (HUD), EyeTaps or the like. The framework and device also comprises one or more motion tracking technologies for deriving a location and orientation in space, like e.g. digital cameras and/or other optical sensors, accelerometers, GPS, gyroscopes, solid state compasses, RFID, etc. For example, such AR-functionalities can be orientation tracking, world tracking, plane detection, object detection, image detection, saving, loading and sharing AR-content.

For example, a still image, a live video or an image stream is captured by a camera, spatially referenced in its environment and overlaid by a virtually rendered object on top of the video or image(s). For example, WO 2018/160921, KR 100992619, KR 101450133B1, KR 101875879, KR 101433614, mention some examples of AR in underground utility visualization.

Such AR frameworks are designed for placing some digital content on top of existing (real) objects. For example, real objects come in form of video feed through the camera, the video is rendered and then a 3D object is placed on top of the rendered video frame. If the digital object transformation has the same parameters as the view of the camera, illusion of augmented reality' is created for a human's visual system.

This however doesn't work well in cases where X-ray-like vision is required - for example when looking into solid surfaces like underground in the present invention. AR-views of subsurface items are mostly not convincing to the human eye. The view is odd, and it is not clearly apparent which of the overlaid items are up and down with respect to the real world image, where the items are actually located, in which depth they are, in which spatial reference they relate with respect to above ground objects, etc. If not done properly, visual fidelity is lost and digital objects seem like wrongly placed, in particular floating above or in front of the reality, often seeming to float in mid-air without any obvious relation to the real world view.

It is therefore an object to improve such an AR-view of at least partially underground infrastructure from above ground. In the scope of the present invention, a usage in the field is a preferred embodiment - not an offline editing of prerecorded or stored data like aerial images, satellite images, maps or the like - but an automatic processing in the real world and in real time, for achieving a realistic augmented view all the time while moving around in the field for one or more users.

Another object in such AR-applications is safety of the field worker when visualizing an immersive AR-view, in particular when working with larger digital assets on larger displays (or displays covering most of the worker's field of view (FOV)). These virtually overlaid digital assets might cover large portions or even most of the screen (or FOV) and those overlaid renderings can occlude real world objects coming into the proximity of the field worker. Thereby, the worker is likely to be unaware of e.g. a nearing car, curbstone, hole or pit, barrier, worksite equipment, moving excavators, etc. Such an augmenting can put the field worker to severe risk of accidents, in particular when walking around while having his view and mind focused on the AR-view at the screen or at his AR-Headset, as it is often the case.

It is therefore an object of the present invention to provide an augmented view of underground infrastructure, in particular in an on-site used augmented reality system for planning and verify excavations or other underground construction work. An aspect can therein be to improve an augmented view of underground infrastructure, for example to provide improvements in the readability, comprehensibility and intuitionally of the provided AR-view for one or multiple human operator. Other aspects are avoiding dangerous situation by miss-interpretation of location and/or depth of an expected underground structure in the AR-view.

It can also be a specific object to achieve improvements in the safety of the on-site workers operating such AR-systems.

Those objects are achieved by realizing the features of the independent claims. Features, which further develop the invention in an alternative or advantageous manner are described in the dependent patent claims.

The present invention relates to a method for providing and/or generating a real time augmented view of an underground infrastructure in a real world scenery. It comprises at least a deriving of a real time image or a video stream of images of the real world scenery, for example by a 2D or 3D camera-unit which can be located at viewing device like a tablet computer, a smartphone, a headset, etc. The method is also deriving a location information for the field of view of the image, in particular the method is deriving a six degree of freedom spatial reference of the image and its image content by image processing. Besides such an evaluation of the image, the deriving of the spatial reference can also comprise data from an inertial measurement unit (IMU), from a navigation system like a local and/or global navigation satellite system (GPS), a base station navigation, etc. at the viewing device. The viewing device can also comprise a depth camera, like a time of flight camera, a stereo camera, a range image camera, a laser scanning unit, a structured light 3D scanner, etc. There can also be additional auxiliary cameras besides a main view camera mentioned above, which are pointing out from the viewing device to cover a maximum area around the operator, like at a Head Mounted Display (HMD). The deriving of the location information can in particular comprise sensor fusion of multiple of such sensors which can be configured to derive positional or navigation information, e.g. also to overcome instances when one or more of the multiple sensors is blocked or has insufficient data. The deriving of the spatial reference, image processing and/or IMU-evaluation can for example be provided by computational frameworks of augmented reality toolboxes.

The method is also deriving geospatial information of underground infrastructure in vicinity of the location information for its field of view from a storage, for example from an underground infrastructure-, BIM- or geospatial-database, e.g. via Open Geospatial Consortium (OGC), Web Map Service (WMS), Web Feature Service (WFS), Web Coverage Service (WGS) or others, preferably on-line by a wireless networking interface or from a local storage unit. The method according to the invention is then calculating a virtual rendering of the underground infrastructure with a same virtual field of view and perspective as the field of view of the image from the camera, in particular based on the location information and the six degree of freedom spatial reference. The virtual rendering can in particular be established from a same point of view (POV) of the camera and/or of the operator.

With an augmenting by combining the image from the camera with the virtual rendering, a providing of a resulting augmented image or stream of images can be established, for example by a two or three dimensional or stereo vision unit.

According to the invention, the virtual rendering and the augmenting is done with a determining of a ground surface in the image and transforming the ground surface by a semi-transparent virtual representation of the ground surface, preferably by a virtually rendered semi-transparent layer or a translucent-glass effect. The semi transparency according to the invention can e.g. be in a range between about 5% to 95% transparency, preferably between 20% and 80%. In other words, the present invention is transforming the ground surface into an adaptive glassy material, which can in particular be adaptive dependent on at least one of a surface condition, weather condition and/or light condition in real world.

In other words, the present invention is configured to provide an auto-adaptive AR-view that is rendered live or in real time in the field, based on a present real world video stream. Therein, a camera loopback is provided - in which a video feedback from the real world camera images is used to adapt transparency and/or virtual shadings of the virtually rendered underground infrastructure according to visual textures derived or excerpted from the real world camera images. Such results not in a simple overlaying of a computer rendered 3D-objects on top of a camera image as done in prior art, but to auto-adapt the virtual rendering based on the real word video feedback, preferably in real time while viewing an augmented real world at a site. Such can for example comprise an adapting of a transparency of the virtual rendering based on the real world video feedback in real time.

Therein, a visual feature at and/or above the ground surface is - preferably automatically by a computation or artificial intelligence unit - detected in the image and augmented by a semi-transparent or translucent virtually rendered representation of this visual feature, which is configured in such a way that it visually provides an under-glass-cover representation of the virtually rendered infrastructure that is located below the ground surface. The visual effect on the virtually rendered underground structures that is established according to the invention can be described like looking on them as under a glass-like cover or like in a kind of aquarium, in such a way that the underground structures are visible for a user - but at the same time the user sees and/or feels the ground. In other words, in the present invention, the ground surface is turned into a virtual glass or frosted glass cover that is provided above the underground structures. For example, the virtually rendered representation of the visual feature can be overlaid to at least portions of the image from the camera in a faded and/or color filtered, semi-transparent form. Such visual features can e.g. be ground markings, manholes, ducts, gutters, vegetation, etc. at ground.

In other words, the virtual rendering and the augmenting according to the invention can be done with a determining of a ground surface in the real world image and a deriving of transforming a real world ground texture of the ground surface from the real world image with a generating an at least partially semi-transparent virtual representation of the ground surface, preferably by a virtually rendered semi-transparent layer or a translucent-glass effect, as a virtual ground surface. Therein, the rendering of the virtual underground infrastructure is configured to provide the real world ground texture in a see-through rendering atop the virtually rendered underground infrastructure in the augmented image. In particular, the providing is established with the rendering of the virtual underground infrastructure semi-transparent and below a virtual ground surface with a virtually rendered semi-transparent layer or a translucent-glass effect that is the virtual ground surface visually comprising or visually preserving the real world ground texture in the augmented image. The generating of an at least partially semi-transparent virtual representation of the ground surface can therein comprise a deriving and/or transforming of at least a portion of a visual texture of the grounds surface in the image, in particular based on a luminescence channel and/or on differences in brightness of the image of the ground surface, that is then applied, in particular atop, to the AR-view.

The semi-transparent rendering can in particular be done with a color- filtering and/or alpha blending algorithm, for example as available in a digital image processing software library or AR software library at the AR-enabled-device. Besides those algorithms, also more sophisticated semi-transparency methods can be applied, in particular to achieve above mentioned aquarium effect more realistic, e.g. comprising virtually calculated reflections, shadings, etc. The semi-transparent rendering is therein configured to be processed in real-time and applied to a live view, e.g. in a frame to frame processing in a video stream, but also with implementing approaches like convolutional feed-forward networks, recurrent convolution neural networks, etc.

The preferred embodiment of a frame-by-frame processing in real time can provide a realistic provision of the augmented view, in particular of the visual effects in the glassy material and/or adaptive lens renderings. For example, the sun or light conditions might change quickly, wherefore the system needs to adapt substantially in real-time to maintain a realistic the effect, for example when clouds move in front of the sun, when leaves of a tree provide a sophisticated and ever-moving shadow pattern on the ground, etc. which the present invention can preserve in the virtual rendering of the virtual ground surface texture and/or at the virtually rendered, augmented structures in the AR-view.

For example, the semi-transparent rendering can be provided with a frosted glass effect that is rendering a virtual glass ground surface, which is translucent by scattering a virtually rendered light from the underground infrastructure that passes through, thus partially blurring the underground infrastructure while still transmitting presence and visibility of the underground infrastructure. This can result in kind of an X-Ray vision, where the operator can see through ground - but the ground itself is not completely removed or occluded. This can be provided by a glassy effect or frozen glass effect that is digitally rendered. This e.g. gives also the advantage that a real trench (or opened manhole, etc.) is visualized as real trench in the AR-view - so the operator will be secure and not fall down into a pit or the like which was hidden in the AR-view. Another example of an advantage could be to prevent operator from possible 'falling down' when immersed by really deep depths. The approach of the present invention is therein done substantially in real time, so it can react on changing conditions by weather, moving objects and their casted shadows etc. to provide an apprehensible AR-view of the ground surface to the operator

In an embodiment, the features of the underground infrastructure that are visible in the image - in particular portions of the underground infrastructure at surface level or portions of the underground infrastructure that had already been excavated - can be automatically detected, identified and matched with an according feature from the information of underground infrastructure by a computational unit.

Therein, the present invention can provide a subsurface positioning system (SSP) that is configured to spatially align virtually rendered subsurface infrastructure to a real world image, to derive an augmented image or view that is presented to the operator. This can be based on a visual positioning system (VPS), which is configured to determine a geospatial location of the device according to a real world image from a camera by image processing and a comparison with known images or known geospatial features within the image. The present invention can also comprise a detecting of portions of underground infrastructure in a real world image from a camera by image processing. For example, such image processing can also comprise specific object detection algorithms configured for detecting instances of semantic objects of an underground utility class, like an algorithm that uses machine learning trained on real world and/or simulated image data, such as Semantic Soft Segmentation, etc. The detected semantic objects, which are part of the underground structure shown in the image are thereby identified to be underground structures and can be further classified to be certain type and/or instance of underground infrastructure. In this process, the present invention can in particular comprise pre-knowledge of the to be expected underground infrastructure at or around the present location which can e.g. be queried from GIS-databases, map data, plan data, etc. The present location can therein be derived by a navigation system like a GPS or another navigation system, by user entry, map coordinates, street coordinates, etc. Taking into account this pre-knowledge assists the detecting and/or classification of underground infrastructure by providing a prediction or rules for the detecting and/or classification, which can make the processing more robust and goal-oriented.

In the present invention, the detecting and/or classification can in particular also be utilized to establish a more exact and robust spatial matching by an embodiment of the visual positioning system as e.g. discussed above, configured for rendering the virtual infrastructure at a correct location and/or pose, reducing computational effort and thereby achieving faster refresh rates to achieve an update of the virtually rendered infrastructure substantially in real time.

For example, features or portions of underground infrastructure that which are at or above ground level, such as a drain cover, fireplug, lamppost, terminal box, duct cover, etc. can be detected and identified in the real world image and dimensionally surveyed in their location in the real world image. The rendering of the information on the virtual underground infrastructure can then be exactly aligned to their location in the real world image as positional reference, and such a once determined positional reference can then be maintained, even when the field of view of the real word image moves, which requires comparably low computational effort. Deviations or ambiguity between multiple of such features or portions a can be resolved in form of a voting routine and/or an optimization problem.

In another example of an at least partially excavated underground infrastructure at a site, the above described routine for ground or above infrastructure features can also be applied to the partially excavated portions of the infrastructure, whereby an realistic spatial alignment of the virtual and real world view can be established and/or a virtual labelling of the underground infrastructure according to the identification and/or classification (or by online-derived metadata for the identified infrastructure) can be provided in the augmented image that is provided to be perceived by an operator according to the invention.

Therein, the matching provides a spatial reference for an alignment of the virtual rendering and the real world image, which provides a visual fit of the virtual and real world representation in which the matching of the virtual and real world feature provides a spatial locking of the virtual and real world view with respect to each other (which can also be done in background when the virtual rendering of the features is actually blinded out from the augmented view).

Therein, a texture, color and/or transparency level of the virtual rendering of the underground infrastructure can be automatically adapted dependent on the infrastructures depth, parallax and/or a lighting simulation that is derived from the image. In particular, an overlaying of different underground infrastructures can be staggered (or spatially hierarchized) according to their depths, preferably with an increasing transparency and/or darker rendering at lower depths.

The virtual rendering according to the invention can comprise a virtual trench, which can e.g. comprise trench walls and/or a trench bottom. The virtual trench is therein configured to be resizable and comprises a view of a virtual excavation of a section of the field of view. Therein, the rendering of the underground infrastructure can be rendered with a transparency effect outside of the virtual trench and without (or with comparably lower) transparency effects inside of the virtual trench.

The virtual trench walls and the trench bottom can preferably be rendered with shading effects from the underground infrastructure, in particular calculated according to a lighting simulation derived from the image, preferably comprising a texture according to a local ground condition derived from the geospatial information of the underground infrastructure.

In an embodiment of the invention, a virtual indication of a flow direction and/or flow rate in the underground infrastructure can be virtually rendered, for example according to a meta-information provided with the geospatial information of the underground infrastructure. In particular, in a semi-transparent view of the underground infrastructure, such a flow of a liquid, gas, electricity or data can be rendered in form of an animation inside of the semi-transparently rendered infrastructure that is configured to symbolize a flow of matter and/or by arrows.

In an embodiment, the meta-information can also be read from buried sensors in the pipe, at the pipe or over the pipe or read from specialized ad-on sensor devices on the ground, like a ground penetrating radar (GPR), a sound detector for water leakage, ultrasonic reflections, etc.) that can be connected directly to the visualization device by Bluetooth or another wireless interface or which can provide its measurement data via an online cloud storage and/or computation service or online from the owner/carrier of the underground infrastructure. The meta-information can also be provided as output form a monitoring system and/or from standard industrial protocols used in relation with this underground infrastructure.

A virtual rendering of the underground infrastructure according to the invention can also comprise a variation in the shading of the texture of the virtually rendered underground structure and shadow mapping, which shading can e.g. be rendered dependent on a distance, depth and/or parallax with respect to the point of view.

In an embodiment of the invention, an information on the rendering of the underground infrastructure can also be provided to another remote augmented reality viewing device, which has another field of view of at least partially the same scenery. Preferably, in this providing a virtual marking and/or editing of the virtual rendering can be interactively shared in-between those at least two augmented reality viewing devices by a communication interface, wherein a location of this virtual marking and/or editing is preserved. Besides the another remote augmented reality viewing device being at the same location as a first or primary augmented reality viewing device is and each device showing its own individual point of view virtual rendering and image, there can also be an embodiment where the other remote augmented reality viewing device is located remote and provides the same rendered view and image as the first or primary augmented reality viewing device at the site.

In another embodiment, the other remote augmented reality viewing device can provide the virtual rendering of the underground infrastructure not on a real world image, but in an artificially rendered environment of the site, e.g. derived from a CAD or geospatial model. Therein the artificially rendered environment can in particular also comprise an artificial rendering of the device and/or operator at the site in a third person view.

In addition to the virtual rendering of the underground infrastructure, the augmented image according to the invention can also comprise a rendering of an on-ground-level marking which is rendered plumb above the corresponding underground infrastructure for example to replace paint-spraying of ground markings or to assist in spraying of ground markings.

The augmented image according to the invention can also be provided to an operator of an excavator, construction worker or digger at the site in real time during work, preferably wherein the virtually rendered view is dynamically adapted to the actual work progress at site. In an example of an embodiment, the augmented image (and/or its corresponding raw data comprising the real world image and thereto spatially linked rendering data for the underground infrastructure) can also be used as a verification for a visual approval. In an example of another embodiment, the augmented image (and/or its corresponding raw data) can be used for guidance of an unmanned excavation machine, for example for a partially or fully autonomously operating digging machine that is configured to automatically perform at least the non-critical portion of an excavation in sections that are clear from underground infrastructure according to the augmented image. In addition to the virtual rendering of the underground infrastructure, an embodiment of the augmented image according to the invention can optionally also comprise a rendering of a corresponding on-ground-level marking that is rendered plumb above the virtual underground infrastructure at the virtual ground surface. For example, those markings can be rendered in a virtual appearance, shape and symbolic that is similar to real world spray markings as classically used. The present invention can therein comprise a region specific dictionary or library of the commonly used symbols, markings, colors, etc. which can be accessed by an operator to virtually place the virtual markings on the virtual ground surface (e.g. by drag & drop) or the like. In an embodiment, the present invention can also be configured in such a way, that it automatically provides matching virtual markings that are automatically derived from the dictionary or library, located at the virtual ground surface in the AR-image and plumb above the corresponding underground infrastructure. According to the invention, those virtual ground markings can be stored for later usage in the same or another AR-viewing device and/or can be shared between multiple AR-viewing devices.

In an embodiment of the invention, a remote offsite station display can also provide the content of the augmented image of the operator at the site of the scenery. Preferably this remote display can additionally comprise a calculated virtual view of the site of the scenery, in which the operator and/or the current field of view if his AR-image is animated, e.g. in a side-by-side view of the sites AR-image and the virtual view of the site. This virtual view of the site can in particular comprise a position information of the viewing device and/or operator at the scenery, e.g. derived by a reverse-calculating of a position of the camera from the field of view of the image and its image content, optionally combined with a GPS-information or the device's six-degree spatial reference form the augmented reality calculations at the device. In an embodiment, such can e.g. also be used to verify dig machine movements in order to safeguard the digging and/or machine behavior at the site.

In other words, the present invention relates to a method, which is configured to first reduce the reality captured by the device to a simplified and abstracted digital representation of the reality and then to augment the simplified and abstracted digital representation with digital assets representing real underground object. In particular, with a reducing of the reality to derive a digital representation of a physical ground surface and to provide a rendering of this digital representation together with a rendering of the digital assets beneath the surface in an according spatial relation thereto. Therein, rendered semi-transparency effects like e.g. fading, paling, desaturation, washing out, translucency, light transmissivity, diaphanousness, showing through, shining through, blurring, milky textures, etc. can be calculated by a graphical computation unit.

Accordingly, the present invention can comprise a sequence of rendering techniques that manipulate color information in such a way that resulting view enables to see through ground or through reality (visible in the video feed) while preserving it (to the certain visual aspect) and at the same time enables to see digital assets representing what is beneath the surface. The resulting augmented view can thereby provide a high fidelity of the visualized underground assets and at the same time it enables throughput of unexpected reality through its visual composition.

The rendering and augmenting according to the invention can in particular be configured and implemented in such a way that a worker can see both in the resulting augmented view - reality coming from the live video as well as digital assets augmenting reality in his field of view (FOV), without completely obstructing one another. For example, the cameras view is visually transformed by computer generated graphics and renderings to augment the real world view with additional virtual information. Even in an area congested with underground facilities, the worker can therein keep an overview, in particular without losing track of the real world, spatial relation to the real world and potential dangers of the real world. The augmented image generated and provided according to the present invention can also overcome the problems of other technical solutions, in which an augmented view can easily result in depth-sickness or sickness from perceiving heights (acrophobia), in particular for susceptible people. Such a fear of falling down can be omitted or at least reduced according to the present invention and can thereby improve safety of the workers.

The invention also relates to a device or system which is configured for the method according to the invention. The present invention therefore also relates to a mobile augmented reality viewing device which is configured to execute a method as described herein, in particular configured to provide an augmented image derived according to a method as discussed above to an operator of the AR-viewing device. For example, such a device can comprise at least a computation unit, a camera, an inertial measurement unit (IMU), a GPS-receiver, a graphical display, a communication interface and an augmented reality software and/or hardware framework. In an embodiment the device can also comprise a Simultaneous Localization and Mapping (SLAM) unit, configured for constructing or updating a map of an unknown environment while simultaneously keeping track of the device's location within it, which can be utilized in the deriving of the location information for the field of view of the camera image, in particular visual SLAM (VSLAM) that is evaluating the images from the camera.

An embodiment of the invention also relates to an according system providing the method, e.g. embodied as a computation unit. Such a device or system according to the present invention can comprises microcontrollers, microcomputers, DSPs or a programmable or hardwired digital logics, etc., wherefore the present invention can involve or be embodied as a computer program product with program code being stored on a machine readable medium or embodied as an electromagnetic wave (such as e.g. a wired or wireless data signal), which implements functionality according to the invention at least partially in software - which therefore is also an embodiment of the invention.

The computer program product can in particular comprises program code being configured to utilize an augmented reality software and hardware framework at a device to render a virtual representation of a virtual ground surface and a virtual underground infrastructure below this virtual ground surface, and which is configured to apply different levels of semi-transparency for the virtual underground infrastructure and/or the virtual ground surface in such a way that at least a fraction of the real world image is shining through those virtual renderings.

In an embodiment, the computer program can comprise program code that is configured to preserve markings and/or objects at the real world ground surface image in the virtual rendering, in particular with a virtual retracing of those markings and/or objects in a semi-transparent virtual representation or an under-glass-cover representation in the resulting augmented reality image. Underground infrastructure can therein be provided under a virtual, at least partially semi-transparent virtual ground surface that comprises a real world ground texture derived from a camera image of the real world and in real time. For example, with a determining of a visual inhomogeneity in the image of the ground surface and overlaying a semi-transparent virtual rendering of this inhomogeneity on top of the image and on top of the rendered virtual underground infrastructure.

Devices, methods, systems, setups and computer programs according to the invention are described or explained in more detail below, purely by way of example, with reference to working examples shown schematically in the drawing. Specifically,
Fig. 1 shows an example of an embodiment of a real works scenery where the present invention is applied;
Fig. 2 shows an example of an embodiment of an augmented view at an AR-device according to the invention;
Fig. 3 shows an example of a prior art augmented view;
Figs. 4, 5, 6, 7 and 8 are showing some examples of embodiments and aspects according to the present invention;
Fig. 9 shows an example of a remote view as an example of a specific embodiment according to the present invention;
Fig. 10a to Fig. 10g are showing some examples of steps in an embodiment according to the present invention;
Fig. 11 shows an example of a basic flow diagram of the present invention.

The diagrams of the figures should not be considered as being drawn to scale. Where appropriate, the same reference signs are used for the same features or for features with similar functionalities. Different indices to reference signs are used to differentiate between different embodiments of a feature which are exemplary shown. The terms "substantially" is used to express that a feature can, but in general is not required to be realized exactly up to 100%, but only in such a way that a similar or equal technical effect can be achieved. In particular slight deviation, due to technology, manufacturing, constructional considerations, etc. can occur, while still within the meaning of the scope.

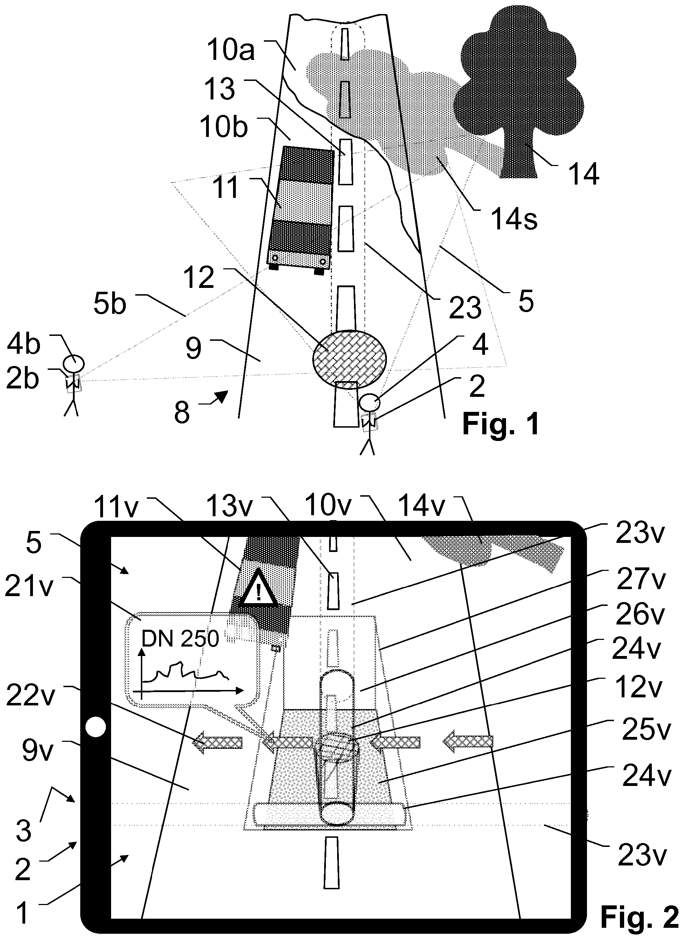

**Fig. 1** and **Fig. 2** are illustrating an embodiment of an example of the present invention. In Fig. 1, the real world scenery 8 of an example of a roadside is shown - although the present application is not limited to roads but can also be utilized at other ground surfaces, like meadows, parks, gardens, squares, etc. The shown street 9 can have various, also intermittent changing or patched covers, like e.g. concrete, tar, gravel, sand, dirt, grass, etc. as symbolized by the different ground cover 10a and ground cover 10b. Other examples for a lack of visual uniformity of the ground cover can also derive from natural and/or artificial lighting conditions, like e.g. shown shadow 14s of the tree 14. The ground surface 9 can also comprise markings 13 at ground, like the shown pavement markings in form of a median strip or others. As e.g. indicated by the manhole cover 12, there are underground infrastructures, like electrical supply lines, water pipes, gas pipes, ducts, channels, sewer systems, etc. that are hidden underneath the paving of the street 9. This street 9 with underground infrastructure, might be under reconstruction and closed for traffic, already at least partially dug up, or partially or fully operational with traffic, wherefore there can also be moving objects, as for example the shown car 11.

One or more workers or operators 4 at the site are each using a vision unit or viewing device 2, which is providing an augmented image or video as an augmented reality view comprising hidden underground infrastructure according to the invention.

Fig. 2 shows an example of an embodiment of an augmented reality view 1 of the real world scenery 8 of Fig. 1 according to the invention, e.g. as presented on the operators 4 vision unit or viewing device 2. Therein, at the real world scenery 8 a two or three dimensional camera 3 of the device 2 is capturing an image 5, a stream of images 5 or a video 5 of the real world scenery 8. For example, such a view 1 can be provided on a tablet computer 2 or on another visualization device that is carried at the site of the real world scenery 8 by the operator 4. As visualization device, the operator 4 can also wear a vision unit like glasses or a visor, for the operator 4 to look at least partially through to see the real world scenario, but additionally equipped with a display or projection unit that is configured to provide a visual representation of a virtually rendered content according to the invention to the eye of the operator 4, in such way that the operator can perceive the scenery 8 in an augmented view 1. The operator 4 can therein use a touchscreen or another input means like a 3D-mouse, a data-glove, gesture recognition of his hand and/or face, etc. to interact with the virtually rendered content. Another embodiment can also comprise a drone or rover carrying a first sub-unit of a device-system according to the invention that comprises the camera 3 at the site 8 and an operator 4 with a second sub-unit of a device-system according to the invention comprising a remote viewing device that is providing the augmented reality view 1 comprising at least portions of the image 5 of the camera 3.

The augmented reality view 1 comprises an image 5 of the field of at least a portion of the view of the camera 3, which is modified by some virtual representations of at least part of the underground infrastructure 24. To accomplish such, the view of the camera 3 is spatially referenced in six degrees of freedom.

For referencing the image 5 and to derive real world coordinates from camera images 5, processes like image registration can be used, e.g. as provided in software frameworks, libraries, APIs and kits which can for example comprise various methods of computer vision, video tracking, visual odometry, etc. As an exemplary embodiment, in a first stage, interest points, fiducial markers or optical flow can be detected in the camera images 5, wherein e.g. feature detection methods like corner detection, blob detection, edge detection or thresholding, and other image processing methods can be used. In a next stage or in a combined stage, a real world coordinate system can be restored from the data obtained in the first stage, e.g. with utilizing methods like projective (Epipolar) geometry, geometric algebra, rotation representation with exponential map, Kalman and particle filters, nonlinear optimization, robust statistics, computer vision and object recognition. In an embodiment, objects with known geometry or fiducial markers can be assumed to be present in the scene 8, in particular surface-visible features of the underground infrastructure 24 such as manhole covers 12, gate-valves, etc. In an embodiment where part of the scene 8 is unknown, simultaneous localization and mapping (SLAM) or structure from motion methods like bundle adjustment can be used to map relative positions. Basis for above-mentioned methods is often provided in commercially or freely available computational frameworks and libraries.

With this spatial referencing of the image 5, virtually rendered representations of visible and/or occluded objects 23 can be visualized or superimposed in exact alignment with where they are actually located in the real world space 8. All those calculations are preferably performed in real time and in semantic context with environmental elements - whereby a so-called augmented live-view 1 is established and provided individually to each operator 4,4b in accordance with his actual point of view and field of view 5,5b.

In the present invention, the field of view of the camera 3 - respectively the content of the according image - has not only to be spatially referenced with respect to a local, relative coordinate system, but also a global geospatial reference is required, in particular for deriving the underground infrastructures. Based on this geospatial reference, a storage (either online in a database, cloud system, data warehouse or BIM-system, etc.) is accessed to deliver information of underground infrastructure 23 for the vicinity of the geospatial location of the field of view 5, e.g. in form of map data, plan data, CAD-data, ARML-data, USDZ-data, or the like.

Based on this information of local underground infrastructure 23, virtual renderings of the underground infrastructure 23v,24v can be generated by a computer graphics unit, wherein optionally also templates, stylesheets, selectors on the number amount and details to be displayed, etc. can be comprised.

Those virtual renderings of the underground infrastructure 23 are then augmented to the real world camera image 5 to provide the augmented view 1 on a displaying device 2. An Augmented Reality Visual System ("ARVS") according to the present invention thereby enables to see what is beneath the surface using augmented reality techniques for positioning digital assets 23,24,25,26 and real-time adaptive rendering of the underground in an under glass cover or X-Ray view.

According to the present invention, there can be at one or more of the following aspects comprised in this AR-view 1.

In an embodiment, the real world street 9 might have various cover materials 10a,10b and/or colors, e.g. also dependent on current whether conditions like snow cover, water, dirt or lighting conditions like direct sun, partial shadow 14s, etc. According to the present invention, such covers and colors in the real world view are preserved in the AR-view 1, by coloring and texturing areas in the virtual renderings in an equal or at least similar color and/or texture, in particular by adapting an adaptive glassy material cover that is virtually rendered in accordance with a real world ground texture from a camera image. For example, a ground surface 9 that is detected by the AR-system can be virtually overlaid by a virtual rendering of this surface 9v, which is rendered to be semi-transparent or opaque and provides a same or similar coloring and/or texture as found in the image 5 of the real world 9. Therein, also shadows 14v casted based on the time of day and the local environment like trees 14, buildings, etc. can be preserved at least to an extent that all these influences are visually preserved to enhance readability and realism of the augmented view 1 on the AR device 2.

In an embodiment where there are moving objects 11, like traffic or another object that could collide an operator 4 in the field, also those moving objects 11 are preserved in the AR-view 1. In particular, the system according to the invention can be configured to detect such moving objects 11 in the real world image 5 and to prevent any fully overlaying of such moving objects 11 by virtual renderings 23 of any static items, in order to ensure the moving objects visibility. In a special embodiment, the moving objects 11 can also be virtually rendered and/or highlighted by a virtual representation 11v of the moving object 11 in the AR-view 1, for example with a semi-transparency or a color filtering effect like tinting the moving object reddish or yellow or the like, optionally also provided with a visual, acoustic or haptic warning signal.

In the shown example, an operator 4 holds a kind of tablet computer 2, configured with AR capability and an according hardware and software framework, and holds it with its backside camera 3 towards the street 9, while the operator is facing its screen. The AR enabled tablet 2 captures video frames of the camera-front 3 situation. The system according to the present invention reads an absolute geospatial information from a navigation system unit (e.g. GPS data, wireless transmitter triangulation, network cell information, Visual positioning system (VPS), Computer vision positioning system, etc.) of the device 2 and places virtually rendered digital content into a composite AR-frame to match its real world location of the digital content that is provided with the content. The geospatial information provides an indication of a location of the device 2 and e.g. combined with IMU-derived tilt data of the device 2 with the camera 3 also a geospatial reference of the field of view 5 of the camera 3. Such geospatial information alone can be sufficient for querying a database or a plan for known underground infrastructure 23 at and around this location to derive underground infrastructure information. But in general, the positional accuracy and reliability of the thereby derived geospatial information alone will not be sufficient to generate an adequate augmented reality view 1. The present invention therefore not solely rely this geospatial information, but combines or enhances it with a spatial information from the AR-system of the device 2. In special embodiment according to the present invention, the system can therein use image recognition techniques (like machine learning, image recognition, pattern perception) configured to automatically (or semi-automatically with operator-interaction) detect and identify features or portions of the digital content which are visible in the real world image 5 - like the manhole cover 12 of the underground infrastructure - and use a localization of those features in the camera image 5 to align the virtually rendered digital content to the corresponding underground infrastructure feature and/or another spatially fixed landmark (like a building-portion, a light pole, a Hydrant, a surface reference mark, etc.) to enhance positional accuracy and a matching of the virtually rendered items and the real world image 5. Thereby, the present invention provides a subsurface positioning system for aligning the virtually rendered infrastructure to the real world image more accurately and quickly.

The system can therein also use markers with known (and preferably static) location as reference points for snapping into the augmented reality situation, in particular with implementing a store and reload operation for the AR-view, like when re-visiting a site at which at least one former AR-view had been created. Such information on site specific reference points can therein also be stored in a database, like in the database comprising information on the underground infrastructure. Also, in an embodiment where a shared multiuser AR-view of a same site by different operators from different viewpoints is established, such reference points or features can be detected and shared between multiple AR-devices 2 and 2b to provide a consistent view of the first AR-device 2 and a second differently located AR-device 2b - each providing an individual AR-image 1 according to its respective point of view, but sharing common virtually rendered image content 24v, 12v, 13v, 27v, 9v, 14v,... in their respective AR-images 1, that is rendered individually according to the devices individual view 5,5a.

Such a matching of visual portions of the underground structures 12 in the real world image 5 with the same portions of the virtual rendering of the virtual underground structures 12v can result in a correct positioning of the digital assets 23v, whereby the ARVS visually blends digital assets 23v and real-world frames in a way that enables to visualize underground infrastructure 23 in clear and high fidelity.

In an embodiment according to the invention, where there can be other markings 13 on the ground, the system according to the invention can be configured to provide an initial composition, which is visually preserving such markings 13, like street signs on the street while displaying underground assets. For example, such can be performed by capturing street cover 10b texture (for example by using detected plane samples) and applying a related color filter that is configured to preserve high contrast signs - while other smooth and low contrast areas are applied to use a transparent, semi-transparent or blurring digital filter effect. The color filter can therein apply a graduation of different percentages of semi-transparency, in particular applied in accordance with a spatial staggering of the assets visualized in the AR-view 1 from a more transparently rendered or filtered top to a less transparently rendered or filtered bottom asset. In another example, a throughput 22v of a digital underground pipe can be visualized in a similar, semi-transparent rendering. In an embodiment this operation can comprise a blending of the camera image 5 and digital assets 21v,11v, 13v, 22v, 9v, 24v, 23v, 25v in bottom-up order with various grades of transparency.

By the semi-transparency of a texture and/or of objects at or on the surface 9v, pipes 23v,24v or other underground infrastructure is provided visible beneath the street 9v in natural and self-evident way, in particular with preserving or going over street signs 13v and markings in a semi-transparent virtual rendering or color filtering the present invention enables a human to perceive parallax effect and thus better understand a depth of the virtually provided digital assets of occluded underground infrastructure 24v as well as its positioning.

According to the present invention, awareness of the real situation is preserved while working in artificial reality 1 (or mixed-reality) at a worksite. By not simply overlaying a rendered virtual object on top of a camera image 5, the present invention also provides moving objects 11, as high contrast objects, on the street 9 visible for the operator on the screen, which provides safety and reduces a change of getting hit by such a moving object 11 while being fixed on the AR-view at the screen.

In an embodiment of the present invention, a color and/or texture of a virtually rendered underground infrastructure like a buried pipe 23v,24v can automatically be adjusted according to the actual lighting conditions 14s, real street cover texture 10b, the actual texture or color of the infrastructures 24v according to its material, and/or its depth in real-time. This enables to see different digital infrastructure 23v,24v in the AR-view under various conditions which are preserving a natural 3D perspective view, in particular in a virtually rendered "under glass cover" view. For example, deeper or further away objects can be rendered to be darker than shallower or closer ones. Many AR-frameworks also provide at least a basic model of the actual lighting conditions, whereby shadows of real world and/or virtually rendered objects can be calculated by a graphical computation unit and being rendered in form of different shadings.

In an embodiment, an automatic extraction of ground signs 13v at a level of surface 9v can be provided in the virtual view 1, providing an on-ground infrastructure schematics. Thereby, the present invention can auto-extract and virtually project 2D signatures 22v of the underground infrastructure 23v,24v on the ground 9v. Those can e.g. be provided to physically mark those ground signs in real world (e.g. by applying paint markings on the street 9 for later reference when excavation happens) and/or to improve a depth perception for an operator 4. In particular, those signatures can also be labelled 21v, decorated and/or animated, e.g. to indicate a type of the underground infrastructure (like the exemplary indicated pipe diameter DN250 in 21v), a depth value of the underground infrastructure, a direction of flow, a usage profile (as exemplary show by the graph in 21v) or other aspects/attributes, e.g. derived from remote database or plan resources. The device 2 can also provide software tools to derive virtual dimensional measurements in-between the real world and/or virtually rendered objects shown in the augmented image 1. In an embodiment, such virtually projected signatures can be blended with the real world ground view in such a way that they are rendered like really sprayed on the ground 9 or the signatures can be displayed in the similar style as street signs on the ground for easy readability on screen. Thereby, the present invention utilizes ground as the operator's screen for displaying augmented information at a huge real estate surface rather than on a comparably tiny and potentially overcrowded screen only. Therein, the present invention can not only utilize real world ground for displaying information at ground, but also the glass-like textured virtually rendered ground. In an advanced embodiment, the augmented image can also comprise a virtual rendering that is configured to visually provide a labelling of the underground infrastructure by a label 21v that is located directly on a real world underground infrastructure 23 and/or on a virtually rendered underground infrastructure 23v,24v, in particular in such a way that the label 21v visually appears to be part of the underground infrastructure, like e.g. being part of (or applied to) a surface of a pipe or wiring. In an embodiment such a label 21v can also comprise a live value of a physical property of/at the underground infrastructure, e.g. a flow value, voltage, current, pressure, temperature, etc. that is gathered from a sensor sensing this underground infrastructure 23, either by a direct communication link to the sensor and its measurement data, or by a preferably real-time online network, database or cloud access to sensor data, which data that is provide at or as virtually rendered label 21v for the underground infrastructure 24v.

In particular, such virtually projected signatures 21v,22v can be projected on ground as dynamic attributes that dynamically change in real time. For example, real-time sensor readings from a sensor at or in the underground infrastructure can be provided in the augmented image 1. In an exemplary embodiment, a pipe-inspection camera view can be provided, wherein an actual location and/or field of view of the pipe-inspection-unit can be virtually rendered in an - e.g. at least semi-transparent or virtually opened - rendered view of the examined pipe 24v. For example, an examined pipe can be render with a projection of the camera image from the inspection as a texture at the walls of the virtually rendered pipe. In another example the pipe can be virtually rendered in a partially opened view, for example with a top of the virtual pipe 24v being removed or (semi-)transparent and revealing a location of the inspection unit (which can optionally also be rendered inside the virtual pipe 24v) and with a bottom of the virtual pipe 24 been rendered solid without or with lower transparency than the top, e.g. by rendering breaking lines or the like. Also real time information about the underground infrastructure 24v (like a switching state, being live, current load, etc.) from a remote database can be rendered and displayed in the augmented image 1 according to the present invention.

In an embodiment according to the present invention, the augmented view 1 or image 1 can be provided with a virtual excavation tool that can be implemented in software. Therein, a virtual excavation or virtual trench 27v is rendered and provided, which is configured to isolate and simulate what areas will be impacted by opening the street 9 and digging into the ground. It enables to delineate and place excavation on the street 9 and see what underground infrastructure 23v,24v is going to be visible and has to be taken care of during excavation. Therein, the virtual excavation 27v can be virtually resized, e.g. sides 26v of this excavation 27v can be shifted, modified in their tapper angle, provided with virtual bulkheads, resized or variably shaped by interaction of the operator 4. In an embodiment, the virtual excavation 27v can be modified and/or proposed automatically by a computation unit, e.g. to automatically propose minimum excavation area based on predefined criteria - such as segments of pipes to be repaired, minimal width, clearance, maximum cost, minimum, maximum or derided excavation volume, taper angle, space required for executing the repair work, etc. In an embodiment, an operator 4 can move, resize, rotate or morph sides 26v of the virtual excavation 27 by touchscreen gestures and/or numerical inputs, preferably in a dynamic and interactive adaption of the virtual rendering in the augmented view 1.

In an embodiment, a bottom 25v of the virtual excavation 27v can be rendered with a bottom texture, which is configured to adapt to a real-ground, e.g. sensed by camera or derived from a database comprising information on the roadside construction, e.g. a depth of a frost-wall, construction material used, etc. In another embodiment, the bottom texture 25v can be automatically chosen to derive a maximum contrast with the virtually rendered underground infrastructure 24v, (e.g. by using complimentary colors), which can provide additional contributions to the visual readability of the virtually rendered underground in the augmented image 1.

In an embodiment, a top of the excavation can be rendered to be electively opened or closed. In closed rendering mode, a street ground 9v can be rendered to be converted into a glass-like, transparent or semi-transparent texture which spanning the top of the excavation 27v, whereby an operator 4 is provided with a better perceiving of a parallax when looking substantially straight down. As mentioned above, an automatic adaptive process can therein take a current real world street texture 10b into consideration and can preserve an at least semi-transparent rendering of significant aspects of the current real world street textures 10v, markings 13v and/or objects 11v at or above street level, which can be extracted from the real world image 5 by image processing.

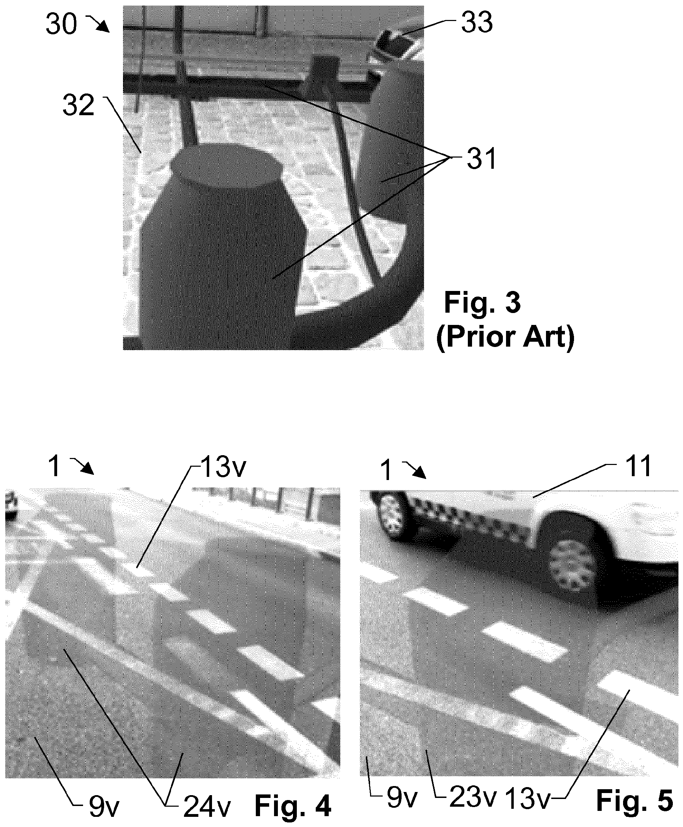

**Fig. 3** shows an example of prior art, where there is an AR view 30 with a simple overlay of rendered structure 31 to a camera image. Palpably, this augmented view is not convincing to a human operator, as it gives the impression that the solid and uniformly colored pipework 31 and ducts 31 are above ground or street 32 level, with no perception of their actual depth or exact location with respect to the image or the street 32. This prior art view 30 also occludes the approaching car 33, which can result in dangerous situations for the operator.

In an example of a simple illustrative embodiment of the present invention in **Fig. 4**, an image from an AR-viewing device camera is augmented with rendered underground infrastructure 24v, but the view is much more realistic than in prior art. Therein the underground infrastructure 24v is rendered semi-transparent, and also the street surface 9v is rendered as a kind of opaque glass layer at surface level atop of the underground infrastructure 24v. In this example, the augmented image 1 is also comprising virtual renderings of the street markings 13v at the street surface 9v, which is so to say preserved in the augmented view 1.

**Fig. 5** shows an example of an embodiment according to the invention, similar to Fig. 4, but with an approaching car 11 in the camera image. According to the invention, this car 11 is not hidden or occluded by the virtual renderings 24v, but still fully visible in the AR-view 1. In an embodiment according to the invention, the car 11 can also be detected and classified by an artificial intelligence unit, whereby a warning can be issued to the operator. In another embodiment according to the invention, a detected moving obstacle 11 can also be virtually rendered in the AR view 1 or the moving obstacle 11 can be color-filtered to be presented tinted in a warning color and/or blinking or otherwise visually highlighted. The virtually rendering according to the invention is therein done with a determining of a ground surface in the real world image and utilizing a virtual representation 9v of this ground surface, e.g. by a virtually rendered semi-transparent layer or a translucent-glass effect as shown. The underground infrastructure that is known to be occluded in the actual view of the real word image according to known plan information is therein virtually rendered as 23v underneath the virtual ground surface 9v with a semi-transparent texture and augmented to the real world image and provided as an augmented image 1, wherein the virtual ground surface 9v and a visual feature 13v at and/or above the ground surface is overlaid atop of the virtually rendered underground infrastructure 23v in a translucent virtually rendered representation of the ground surface 9v and/or visual feature 23v.

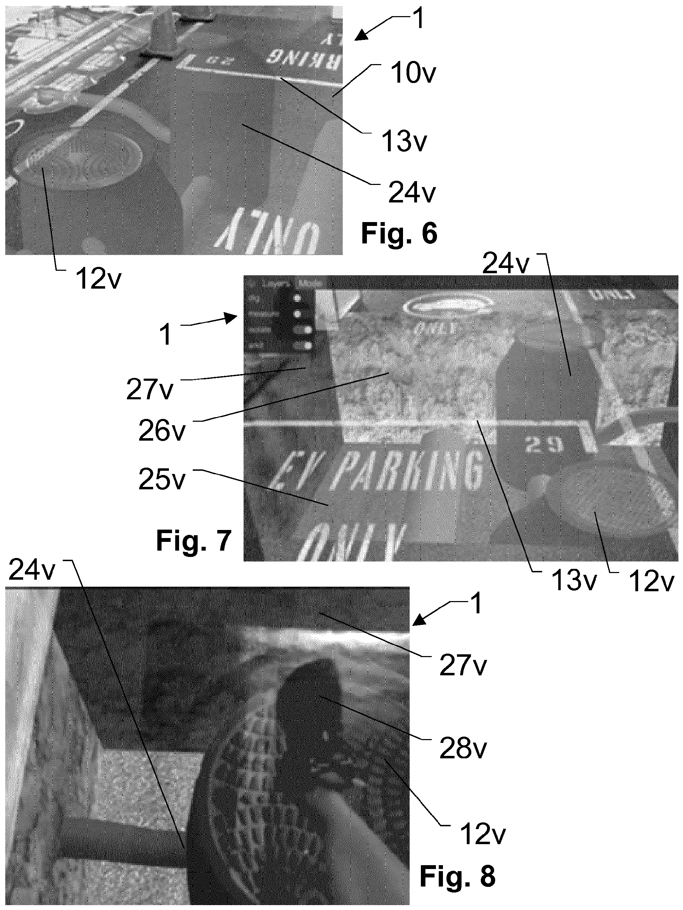

**Fig. 6** shows an example of an embodiment of a provided augmented image 1 derived according to the present invention, in which there is a translucently virtually rendered ground surface 10v is augmented to the real world image from a camera at the location of the real world ground surface as derived by the AR-software framework on the device. This virtually rendered ground surface 10v therein also preserves textures and/or markings of the real world ground surfaces, as e.g. by the virtually rendered ground markings 13v, which can e.g. be implemented e.g. with alpha compositing, alpha blending, color filtering or another image processing approach resulting in partial transparency. The underground infrastructure is then combined with the real world image and the virtually rendered ground surface 10v as a virtually rendered underground infrastructure 24v, which is rendered below the virtually rendered ground surface 10v, semi-transparently overlaid by the virtually rendered ground surface 10v.

Possible portions of the underground infrastructure which are visible in the real world image (e.g. being located at ground level as the shown manhole cover 12v or being at least partially uncovered by excavation, etc.) can are therein overlaid at ground level 10v. Those portions of the underground infrastructure which are visible in the real world image can also be used as a location reference for positioning and/or scaling the virtually rendered underground infrastructure 24v, 12v with respect to the content of the real world image from the camera, e.g. with an operator initiated and/or at least semi-automated detection and identification of those features, which can comprise digital image processing and/or artificial intelligence computation systems.

For example, the camera of the AR-viewing device is providing a live video stream of the field of view. In an embodiment of the AR-viewing device that provides no optical see through - like it would be the case with some AR-Glasses or the like - the images or frames of this video stream are provided as background in AR-view - providing a live view of the real world in real time. Those images are then augmented by overlaying a virtually rendered view of underground infrastructure in at least a defined portion of the image - for example in the whole field of view or in another example in a virtual or real world excavation area only. This virtually rendered view is provided at a location and orientation with respect to the image content, which conforms to its real world position and which is updated in real time, preferably for each of the images or frames of the live video. This can e.g. be established by deriving a location and pose of the camera and of the cameras field of view, e.g. according to photogrammetric considerations, SFM, SLAM and/or Inertial sensors, etc. and on basis of plan information of the underground infrastructure from maps, databases, etc. According to the present invention there is yet another overlaying at or atop of the virtually rendered content, which is again based the live video images of the real world that is taken by the camera. Therein, surfaces and/or textures of the real world is again - at least partially and/or semi-transparent provided above the virtually rendered underground infrastructure. For example, textures like street markings, shadow and light conditions, moving objects like cars or workers above ground, or other textures or objects at or above ground level are therein visually preserved in the AR-view e.g. by providing them above the underground infrastructure in such a way that the underground infrastructure is not completely occluded but still visible - yet the underground infrastructure is clearly below those textures or objects. An embodiment can e.g. comprise transparency effects applied to the underground infrastructures and/or to the ground textures or objects. In an example of an embodiment, a visual texture of the ground surface itself can be provided in a glass like, look-through rendering above the virtually rendered infrastructure, whereby e.g. a human operator can apprehend a better depth perception and more realistic feel for the location and depth of the underground infrastructure.

In an embodiment, the present invention can provide an AR-view, e.g. configured as a kind of a stratified approach with at least three stages in the rendering, which can comprise at least a background stage;
comprising a background image which at least partially comprise the real world real time image from the camera, (in an embodiment with a see-through setup like with transparent glasses or a transparent visor this stage can also be provided by the seeing through the AR-visor-device),
at least a blending stage;
comprising at least partially rendered underground infrastructure which can be rendered semi-transparent and/or at least in defined regions of the background image, rendered in real time and conform to the view (and location) of the real world image and
at least a top stage;
comprising an at least partially transparently rendered texture from the real world image provided above of the rendered underground infrastructure.

In the example of **Fig. 7**, an embodiment of an augmented image 1 derived according to the present invention is shown, in which a virtual trench 27v or virtual excavation area 27v is rendered in the augmented view 1 that is provided. In this augmented view 1, only those portions of the underground infrastructure 24v are rendered, which are visible within this trench 27v, while portions outside the virtual trench 27 are not visualized. Preferably, the virtual excavation area 27v is configured to be resizable, for example resizable by an interaction of an operator in breadth, width and/or depth. In an embodiment, the virtual excavation area 27v can also be automatically calculated or proposed by a computation system, e.g. based on a definition of a specific underground infrastructure 24v (or portion thereof) which has to be accessed. The virtual excavation area 27v can therein also comprise a required clearing, angle of slope, sheet pile walls, etc. - preferably automatically derived based on a known soil condition at the present location. This process can also involve an interaction with localization equipment for detecting buried assets, by sound, magnetic fields, ground penetrating radar, leakage detectors, pipe sondes or probes, etc. at the site. In an embodiment, such localization equipment can be identified and spatially located and referenced in the real world image, and the measurements of the localization equipment can be used to automatically compute reference to a problem zone at a specific underground infrastructure location that has to be excavated for repair. As another example, this same approach can also be used to recalibrate a positioning of the virtually provided subsurface infrastructure with respect to the real world in real time during the provision of the augmented view for one time, multiple times or continuously, which can be done based on the measurements of the localization equipment with a synchronizing of the measurement results and the positioning of the virtual view.

The virtual excavation area 27v can therein be rendered with textures at its virtual walls 26v and/or virtual ground 25v, which textures can selected according to a known soil condition or lamination of the underground, can be shaded according to an actual lighting condition at the field of view, can comprise rendered shadows from the virtual underground infrastructure and/or can comprise a texture that is automatically chosen to utilize a high visual contrast with the virtually rendered underground infrastructure 24v. At or above ground visible features 12v 13v can therein be preserved translucently, e.g. with a color-filtering to be semi-transparent and to rendered atop of the virtual underground infrastructure 24v. The virtual excavation area 27v can therein be rendered electively open or virtually covered by a translucent, e.g. glass or translucent glass like, ground layer as shown in this example, which can be rendered to preserve visual features 13v and/or textures of the ground layer from the real world image in a translucent virtual representation thereof.

**Fig. 8** shows an example of an embodiment of the present invention in which an augmented image 1 of a real world worksite scenery is provided in which virtually rendered underground infrastructure 24v is shown in a virtual trench 27v, while preserving a virtual representation of the real world ground surface, as e.g. indicated with the manhole cover 12v that is present in the real world image from the camera and which is visually preserved on top of the underground infrastructure 24v. In this embodiment, a moving object - in this case in form of a foot 28v of the operator of the AR-device at site - is automatically detected by the AR-system to appear in the view and to be above ground, wherefore it is visually preserved above the virtual ground level of the manhole cover 12v and provided in the augmented image 1. Such a system can help assisting accidents of the operator, e.g. by issuing a warning in case of an open manhole cover 12v, in case of a real world trench, in case of a real world obstacle or tool at ground, an approaching tool, machinery or vehicle, etc. In a special embodiment, an operators hand in the field of view of the camera can be detected in a similar manner. This detected hand can then be used as an input "device" for interacting with the virtual reality environment, e.g. with detecting, identifying and evaluating hand gestures (which can e.g. be trained or machine learned). For example, an operator can thereby interact and adapt the virtual excavation 27v, can select or highlight a specific portion of the underground infrastructure, etc. - which information can also be shared in real time with another operator 2b at another device 2b showing a (also perspectival different) augmented image 1 of the same site.

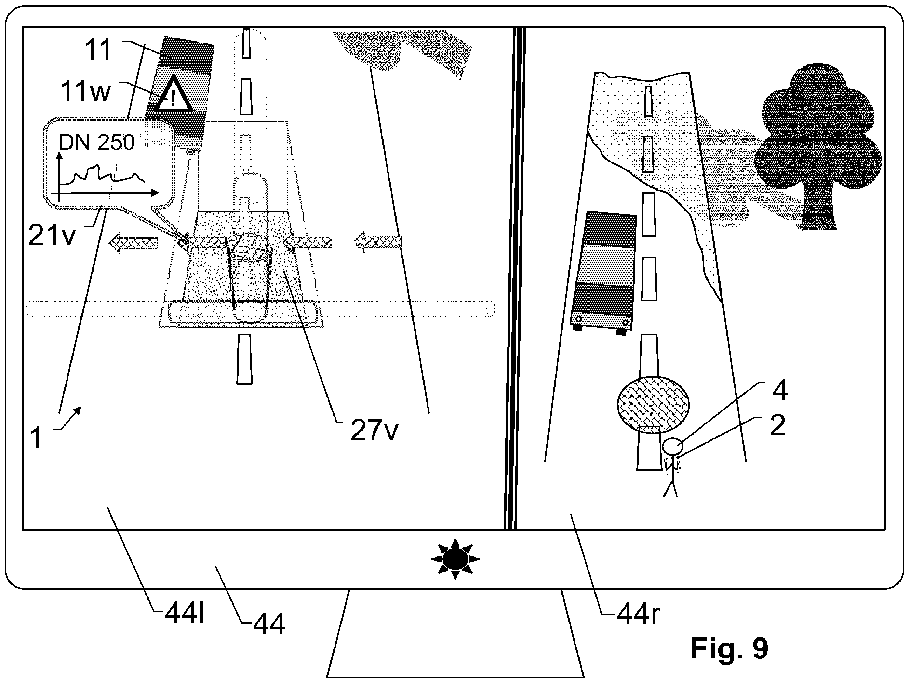

**Fig. 9** shows an example of an embodiment of the present invention in which a remote co-operator, e.g. at an off-site office, is virtually cooperating with the on-site operator 4 of the AR device 2. In the example, an off-site computer screen 44 is shown. At the left hand side 441 it remotely shows an above-described augmented at-site-view 1 according to the invention with a rendered virtual trench 27v, based on a camera 3 of an AR-system at site (see also Fig. 2 et al. for further reference). For example an AR-system 2 carried by a human operator 4 (e.g. a tablet-pc like device, headset or helmet with a camera) or an AR-system 2 located with its camera 3 at a mobile vehicle, like an automatic guided vehicle (AGV) or a drone (UAV). According to a specific aspect of the present invention for this embodiment, on the right hand side 44r of the computer screen 44 there is a virtually rendered bird-eyes-view, in which the on-site scenery is modeled and presented to the remote screen operator for an overview. Therein, the view 44r is derived based on stored geospatial information, plan data, construction data, CAD-data, satellite information, etc. and rendered as a virtual space, optionally at least partially textured with real world photo information, e.g. from the device 2's camera 3, from a street view or from another source. In this view 44r of the virtual space, the location of the camera 3 of the AR-system 2 at site, respectively the operator 4 or the vehicle carrying the camera 3, is also rendered in the virtual space 44r. By messaging, voice communication, augmented reality interaction via virtual items or features, etc. an interactive collaboration of off-site and on-site workforce can be established, preferably in real-time. The view on the computer screen 44, comprising the field view 441 and the artificial scene reconstruction view 44r, is therein preferably updated in real-time.

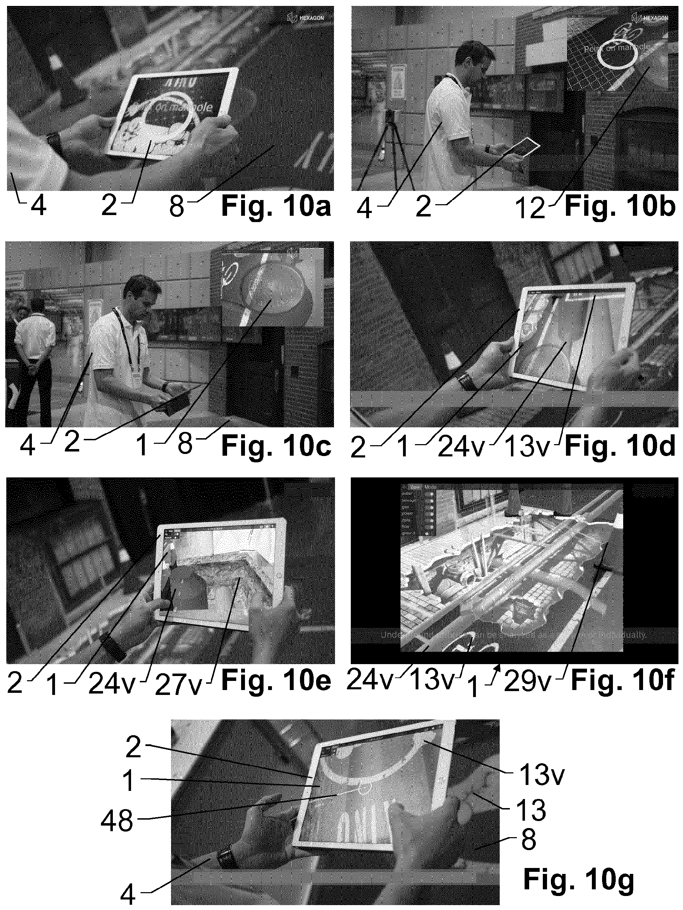

**Fig. 10a** to **Fig. 10g** are showing an example of an embodiment of the present invention in some of the steps of an exemplary workflow according to the invention.

In **Fig. 10a** an AR-system at a device 2 of an operator 4 is initialized in the real world environment 8. Initializing the AR-system at the device 2 can in particular comprise to achieve a solid spatial reference of the AR-system with respect to the real world 8, for example detecting and referencing a ground surface in real world and deriving and generating a corresponding virtual ground surface in the AR-system.

In **Fig. 10b** the AR-system at the device 2 is further spatially referenced for the providing of information on underground infrastructure that is to be visualized by the AR-system. In this example, data regarding the underground infrastructure at the site is derived from a database, e.g. according to GPS or other geolocation information derived by the AR-device. As the positional accuracy and certainty from GPS would not be gratifying and exact enough for an excavation or planning task, the AR-system is configured to query the operator 4 to interactively identify one or multiple fixed known landmarks. In this example, the manhole cover 12, which is in this example also part of the local underground infrastructure to be visualized (but needs not to be), is specifically identified. In this embodiment, the augmented image of the AR-system 2 shown in the top right corner of the figure is overlaying a circle of the known size of the manhole cover 12 at virtual ground level, and querying the operator 4 to move the device 4's view (respectively the circle on the screen) such that the circle match the manhole cover 12 in the real world image. An image processing, detection, identification and/or artificial intelligence algorithm can be used to accomplish such and/or assist the operator 4 in doing so, e.g. with an automatic snapping to visual features in the real world image that are potential candidates (e.g. according to their shape in the present perspective that is derived by edge detection or by some other image processing routine or by an accordingly trained artificial intelligence structure). Thereby an exact spatial reference of the construction data of the underground infrastructure and the real world view in the AR system is established in a ground surface reference and in a lateral reference with respect to this ground surface.

In **Fig. 10c** the AR-system at the device 2 (again shown at top right) is showing the operator 4 an augmented real world view image 1, which provides an image for the real world 8 taken live by the camera of the device 2 that is augmented with a virtual rendering of the underground infrastructure at its correct location in the underground of the real world 8. The augmented view 1 that is in this example provided on the screen of the device 2 is therein configured to use semi transparency and or shading effects of the virtually rendered image portions which are configured to make the underground infrastructure appear underneath a virtual glass cover representation of the ground surface that has been derived by the AR-system, which virtual ground surface can e.g. be virtually rendered in the AR-view 1 in a semi-transparent representation of the real world ground surface.

In **Fig. 10d** it can be seen that the AR-view 1 at the device 2 is showing a virtual rendering of the occluded underground infrastructure 24v as described above, wherein visual features at or above ground level, like the street marking 13v, the manhole cover 12, etc. are preserved in the view 1 and are provided on top of the underground infrastructure 24v. It can also be seen that the underground infrastructure 24v is virtually rendered with shading effects that correspond to the AR-systems point of view.

The operator 4 of the device 2 can walk around randomly, and the AR-system is updating the AR-view 1 in real time to match the thereby changing viewing conditions.

In **Fig. 10e** the AR-system at the device 2 is providing the virtually rendered underground infrastructure 24v in a virtual trench 27v only. Thereby the operator 4 can plan and examine a following digging up of the real world street 8 in advance. The operator 4 can move and/or resize the virtual trench 27v in order to achieve the desired result, can see other underground infrastructure 24v to be taken care of during the digging process, etc. When finished the operator 4 can provide classical spray-markings at ground at locations which he can clearly identify in his AR-view 1 at the device 2 and spray accordingly. Optionally or additionally he can also store and/or transmit the results to another AR-device like the one of a worker, e.g. to an operator of an excavator and/or a digger wearing an AR-helmet or having head-up display. Such a storing and/or sharing of an AR-view can also be done during a planning phase via a wireless networking interface of the device 2, e.g. enabling another operator with another AR-device to see the same underground infrastructure 24v, virtual trench 27v, virtual ground markings 13v, etc. from his own different point of view.

As another example, in this AR-view 1 the operator 4 can also define measure constraints on where to place or plan a trench 27v to be excavated, e.g. in such a way that the trench 27v doesn't go into restricted areas, in order to prevent other cables or infrastructure damage, etc. In an embodiment according to the invention, the subsurface locating system can automatically warn of gas-pipes, wirings or the like that pass through a planned trench, or the system can even automatically propose a trench 27v (or a route for an planed additional underground infrastructure) in a section where there is minimal impact and/or overlap with existing underground infrastructure. Also, above ground facilities and impacts can therein be taken into consideration, like e.g. required road blockings, road re-establishment, tree-removals, building demolition, etc.

In an embodiment, also a potential risk of accidentally cutting of an underground power supply line can be automatically evaluated. As another option, also consequences of a purposefully precautionary shutdown of the power supply line during a (limited) duration of a critical excavation stage - e.g. in order to safeguard the workers - can be automatically evaluated by accessing according information of the underground infrastructure that is presently shown or highlighted in the augmented view 1. Such evaluated information can be provided by the augmented image 1 according to the invention, e.g. based on (preferably live) network data from the power grid, simulation of routing options in the power grid and consequences of implementing those, etc., preferably in real-time. For example, automatically identified scenarios like this power line will affect a nearby hospital or similar constraints or warnings, optionally with providing automatically analyzed proposals for minimizing impacts. For example, a proposal like: A impact on the hospital can be minimized by precautionary switching a power supply bypass route at switch control box Nr. B217 and power distribution box #D-17-423 routed at electric power transformation substation T-H229 at 721- 725 Fifth Avenue. And/or an alternative proposal like to precautionary coordinate the schedule of the excavation to coincide with a planned routine emergency power diesel aggregate test run at the hospital, which could be prolonged for the duration of the critical excavation. Just to name some random example.

**Fig. 10f** shows an example of an AR-view 1 according to the invention, in which virtually rendered underground infrastructure 24v is shown in an AR-view that virtually preserves the ground level and its ground markings 13v as well as items above ground, like the cones 29v which are shown in front of the underground infrastructure to perceive the occluded underground structures 24v in a realistic AR-view 1.

In **Fig. 10g** the AR-system at the device 2 is showing an AR-view 1 to the operator 4 from the operators viewing perspective, while preserving a glass like, e.g. kind of semi-transparent view of the ground surface and its visual features 13v of real world 8. In this AR-view 1 the operator can take real world dimensional measurements 48 between virtual and/or real world items shown in the AR-view, can virtually highlight and/or mark certain features in the AR-view 1, can access and fade-in meta-information for the visible and/or occluded features in his AR-view 1, like e.g. a flow direction in an underground infrastructure, possible bypasses or gate valves, usage statistics, size, age and condition of an underground structure, etc.

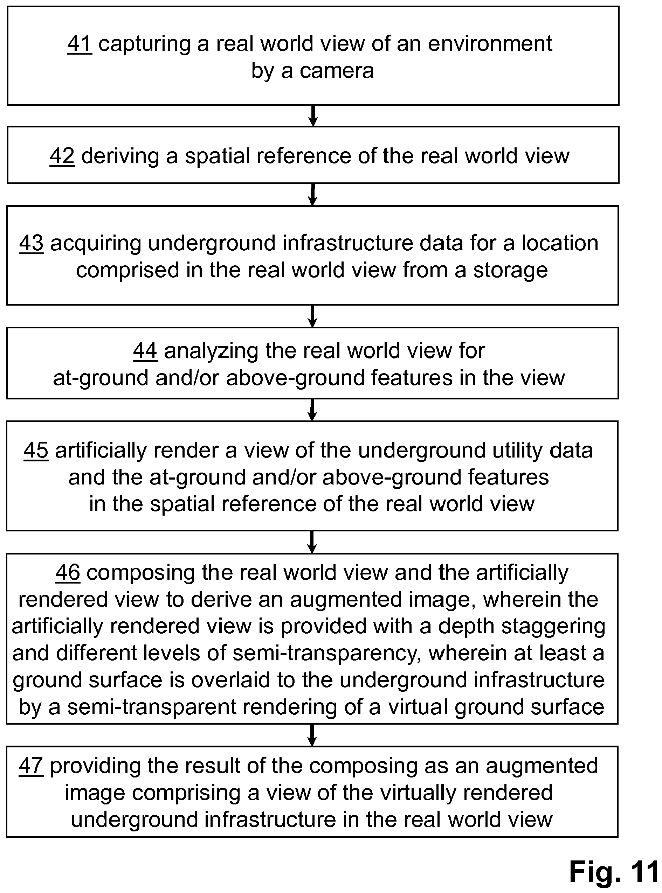

**Fig. 11** shows an example of a simplified flow diagram of an embodiment of the present invention.

Box 41 symbolizes a capturing of a real world view of a scenery by a camera, preferably outdoor at a worksite or planed worksite by an AR-viewing device comprising the camera.

Box 42 symbolizes a deriving of a spatial reference of the real world view with the AR framework at a computation unit at the AR-viewing device, utilizing images from the camera, in particular with the sensor fusion of additional sensor input like from an IMU, GPS, VPS, SLAM, etc.

Box 43 symbolizes an acquiring of underground infrastructure data for the location comprised in the real world view, from one or more storage, online database, GIS-database, etc.

Box 44 symbolizes an analyzing of the real world view for at-ground and/or above-ground features in the real world view by a computation unit. Those above-ground features can for example comprise ground textures, ground-markings, static or moving objects located on ground, etc.

Box 45 symbolizes an artificial rendering of a view of the underground infrastructure data in the spatial reference of the real world view. Therein, the ground surfaces itself is virtually rendered with a digitally rendered see-through texture, which is configured to reproduce the at-ground features and/or ground-textures in a semi-transparent representation. Also, above-ground features can be portrayed in a virtually generated translucent representation thereof.

Box 46 symbolizes a composing of the real world view and the artificially rendered view to derive an augmented image, wherein the artificially rendered view is provided with a depth staggering of objects in the augmented view and with different levels of semi-transparency or translucence, wherein at least virtual the ground surface is overlaid to the virtually rendered underground infrastructure as a semi-transparent rendered virtual ground surface, arranged above the virtually rendered underground infrastructure.

Box 47 symbolizes a providing of the result of the composing as an augmented image that is comprising a view of the virtually rendered underground infrastructure in the real world view, which is configured in such a way that the virtually rendered underground infrastructure is diaphanous and visually located below the virtual ground surface.

A skilled person is aware of the fact that details, which are here shown and explained with respect to different embodiments, can also be combined with details from other embodiments and in other permutations in the sense of the invention.

## Claims

1. A method for providing a real time augmented view (1) of an occluded underground infrastructure (24v) in a real world scenery (8), comprising:
∘ deriving a real time real world image (5) or a video stream of images (5) of the real world scenery (8) by a camera (3),
∘ deriving a location information for the field of view of the real world image (5),
∘ deriving a six degree of freedom spatial reference of the real world image (5) and its image content, comprising image processing and an inertial measurement unit (IMU),
∘ deriving geospatial information of underground infrastructure in vicinity of the location information from an underground infrastructure database, preferably on-line,
∘ calculating a virtual rendering of the underground infrastructure as a virtual underground infrastructure (24v) with a same virtual field of view and perspective as the field of view of the real world image (5),
∘ augmenting the real world image (5) with the virtual rendering (24v) and
∘ providing a resulting augmented image (1) or stream of augmented images (1) by a two dimensional or a stereo vision unit (2), preferably continuously and in real time for a movable field of view of the real world image (5),
**characterized in that**
the virtual rendering and the augmenting is done with
∘ a determining of a ground surface (9) in the real world image (5),
∘ a deriving of a real world ground texture of the ground surface (9) from the real world image (5) and generating an at least partially semi-transparent virtual representation of the ground surface (9), and
∘ wherein the rendering of the virtual underground infrastructure (24v) is configured to provide the real world ground texture in a see-through rendering atop the virtually rendered underground infrastructure (24v) in the augmented image (1), in particular provided with the rendering of the virtual underground infrastructure (24v) below a virtual ground surface (9v) with a virtually rendered semi-transparent layer or a translucent-glass effect that is visually comprising the real world ground texture in the augmented image (1).

2. Method according to claim 1 **characterized in that** a visual feature (11,12,13,14s) at and/or above the ground surface is detected in the real world image (5) and augmented by a translucent virtually rendered representation of the visual feature (11v, 12v, 13v, 14v) in the augmented image (1).

3. Method according to any one of claim 1 or 2
**characterized in that**
features (12) of the underground infrastructure that are visible in the real world image (5) are automatically detected, identified and matched with an according feature from the information of underground infrastructure by a computational unit, wherein the matching provides a spatial reference for an alignment of the virtual rendering (24v) and the features (12) in the real world image (5).

4. Method according to any one of claim 1 to 3,
**characterized in that**
a texture, color and/or transparency level of the virtual rendering (24v) of the underground infrastructure is automatically adapted dependent on its depth, parallax and a lighting simulation derived from the real world image (5).

5. Method according to any one of claim 1 to 4,
**characterized in that**
the virtual rendering (24v) comprises a virtual trench (27v) comprising trench walls (26v) and a trench bottom (25v), which is virtual trench (27v) is resizable, and which comprises a view of a virtual excavation of a section of the virtual ground surface (9v).

6. Method according to claim 5, **characterized in that** the trench walls (26v) and the trench bottom (25v) are rendered with shading effects from the underground infrastructure (24v), in particular calculated according to a lighting simulation derived from the real world image (5), preferably comprising a texture according to a local ground condition derived from the geospatial information of the underground infrastructure.

7. Method according to any one of claim 5 to 6,
**characterized in that**
the virtual underground infrastructure (24v) is rendered with a comparably higher transparency effect outside of the virtual trench (27v) and without or with a comparably lower transparency effect inside of the virtual trench (27v).

8. Method according to any one of claim 1 to 7,
**characterized in that**
a virtual indication (22v) of a flow direction, a flow rate (21v) and/or a metadata (21v) related to the underground infrastructure (24v) is virtually rendered according to a meta-information provided with the geospatial information of the underground infrastructure, in particular in a semi-transparent view of the virtual indication (22v) in the augmented image (1).

9. Method according to any one of claim 1 to 8,
**characterized by**
an automatic detecting of a moving object (11) that comes into a field of view of the real world image (5) and
wherein the virtual rendering comprises a highlighting of the moving object (11) in the augmented image (1), preferably combined with a generating and providing of a security warning (11w) to an operator (4).

10. Method according to any one of claim 1 to 9,
**characterized in that**
an information on the rendering of the underground infrastructure (24v) is provided to a second, remote augmented reality viewing device (2b) with another field of view of at least partially the same scenery (8), preferably wherein a virtual marking (21v) and/or editing of the virtual renderings is interactively shared in between the at least two augmented reality viewing devices (2,2b) by a communication interface.

11. Method according to any one of claim 1 to 10,
**characterized in that**
in addition to the virtual rendering of the underground infrastructure (24v), the augmented image (1) comprises a rendering of a corresponding on-ground-level marking (22v) rendered plumb above the virtual underground infrastructure (24v).

12. Method according to any one of claim 1 to 11,
**characterized in that**
at a remote offsite station display (44), the content (441) of the augmented image (1) of an operator (4) at a site of the scenery (8) is provided plus a calculated virtual view (44b) of the site of the scenery (8), in which calculated virtual view (44b) the operator (4) and his real world image (5) field of view is animated, in particular comprising a position information of the viewing device (2) at the scenery (8) by a reverse-calculating of a position of the camera (3) from the field of view of the real world image (5) and its image content.

13. Method according to any one of claim 1 to 12,
**characterized in that**
the semi-transparent rendering is done with a color-filtering and/or alpha blending algorithm of a digital image processing software library.

14. A mobile augmented reality viewing device (2,2b) configured execute a method according to any one of claim 1 to 13, in particular configured to provide an augmented image 1 derived according to a method according to any one of claim 1 to 13 to an operator (4) of the AR-viewing device (2,2b), preferably wherein the device comprises at least a computation unit, a camera (3), an inertial measurement unit (IMU), a GPS-receiver, a graphical display, a communication interface and an augmented reality software and/or hardware framework.

15. A computer program product with program code being stored on a machine readable medium or embodied as an electromagnetic wave, the program code being configured for the execution of at least one of the methods according to any one of claims 1 to 13, in particular for rendering a virtual representation of a virtual ground surface (9v) and a virtual underground infrastructure (24v) below this virtual ground surface (9v), and which is configured to apply different levels of semi-transparency for the virtual underground infrastructure (24v) and/or the virtual ground surface (9v) in such a way that at least a fraction of a real world image (5) is shining through those virtual renderings, in particular if the program is carried out on an augmented reality viewing device (2,2b) according to claim 14.
